(19) **Europäisches Patentamt**
**European Patent Office**
**Office européen des brevets**

(11) **EP 2 503 307 B1**

(12) **EUROPEAN PATENT SPECIFICATION**

(45) Date of publication and mention
of the grant of the patent:
**03.06.2015 Bulletin 2015/23**

(51) Int Cl.:
*G01H 1/00* *(2006.01)*     *H02K 11/00* *(2006.01)*
*G01N 3/30* *(2006.01)*

(21) Application number: **12161098.4**

(22) Date of filing: **23.03.2012**

(54) **Method for assessment of the winding head vibration of an electric machine**

Verfahren zur Beurteilung der Wickelkopfschwingung einer elektrischen Maschine

Procédé d'évaluation de la vibration de tête de bobine d'une machine électrique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.03.2011 EP 11159735**

(43) Date of publication of application:
**26.09.2012 Bulletin 2012/39**

(73) Proprietor: **ALSTOM Technology Ltd**
**5400 Baden (CH)**

(72) Inventors:
• **Arend, Peter Ullrich**
**5432 Neuenhof (CH)**
• **Steigleder, Kurt**
**68870 Bartenheim (FR)**

(74) Representative: **Alstom Technology Ltd**
**CHTI Intellectual Property**
**Brown Boveri Strasse 7**
**5400 Baden (CH)**

(56) References cited:
**US-B1- 6 289 735**

• ZHANGJUN TANG ET AL: "Analysis of mounting effects on vibrations of switched reluctance motors", ELECTRIC MACHINES AND DRIVES CONFERENCE, 2003. IEMDC'03. IEEE INTERNATIONAL JUNE 1-4, 2003, PISCATAWAY, NJ, USA, IEEE, vol. 1, 1 June 2003 (2003-06-01), pages 97-103, XP010644410, ISBN: 978-0-7803-7817-9
• DAVID SHALLY ET AL: "Generator end winding vibration monitoring", UNIVERSITIES POWER ENGINEERING CONFERENCE, 2008. UPEC 2008. 43RD INTERNATIONAL, IEEE, PISCATAWAY, NJ, USA, 1 September 2008 (2008-09-01), pages 1-5, XP031349001, ISBN: 978-1-4244-3294-3
• KREITZER S ET AL: "The Effects of Structural and Localized Resonances on Induction Motor Performance", IEEE TRANSACTIONS ON INDUSTRY APPLICATIONS, IEEE SERVICE CENTER, PISCATAWAY, NJ, US, vol. 44, no. 5, 1 September 2008 (2008-09-01), pages 1367-1375, XP011234931, ISSN: 0093-9994, DOI: 10.1109/TIA. 2008.2002179

EP 2 503 307 B1

**Description**

TECHNICAL FIELD

The present invention relates to method for assessment of the winding head vibrations of an electric machine.
In particular the present method can be used in connection with synchronous machines, or asynchronous machines, DC machines, electronic machines and electromagnetic clutches. Far sake of clarity in the following reference to a synchronous machine such as a synchronous generator is made.

BACKGROUND

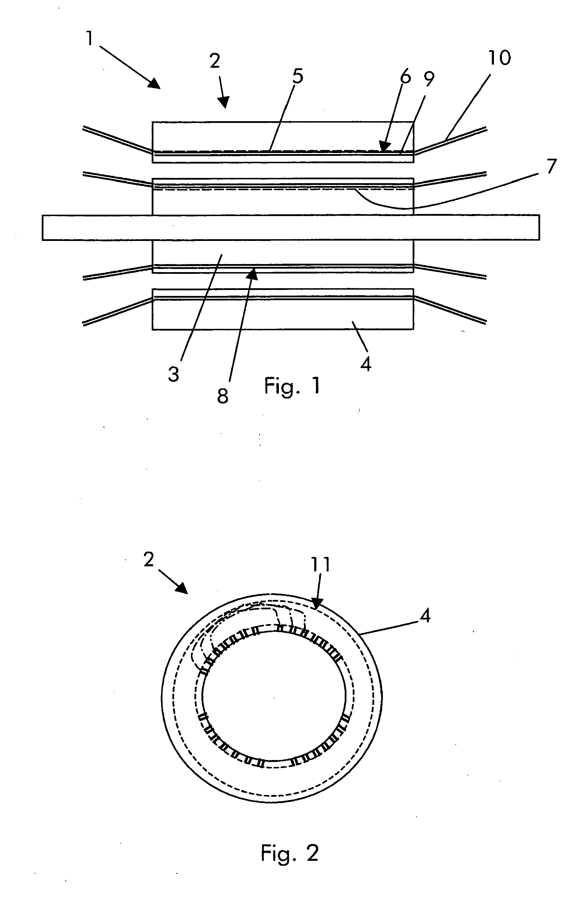

With reference to figures 1 and 2, electric machines 1 such as a synchronous generator have a stator 2 and a rotor 3 rotatable therein; the stator 2 has an annular stator core 4 with slots 5 housing stator windings 6 (to collect ac voltage generated during operation); likewise the rotor 3 has slots 7 housing rotor windings 8 (field circuit) to generate a rotating magnetic field that induces ac voltage into the stator windings 6.
The stator windings 6 have a straight part 9 contained within the slots 5, and parts 10 extending outside of the slots 5 (the so called winding heads); the winding heads 10 are distributed over a circumference 11 (the winding head circumference). Likewise the rotor windings 8 have a straight part contained within the rotor slots, and parts extending outside of the rotor slots (winding heads); these winding heads are distributed over a circumference (the winding head circumference).
During operation the winding heads 10 withstand forces whose predominant component typically:

- is predominantly sinusoidally distributed with p/2 periods over the circumference 11 of the winding heads 10 (p = number of magnetic poles),
- has a frequency being twice the frequency of the operating frequency (i.e. 100Hz for a synchronous generator connected to a 50 Hz grid),
- rotates with the relative speed of the rotating magnetic field.

These forces cause the winding heads 10 to vibrate.
Typically the vibration is defined by a distribution of deflections over the winding head circumference 11 at a certain point in time.
The deflections depend on:

- structure dynamics of the winding head 10,
- the number p of magnetic poles, and
- relative speed of the rotating magnetic field.

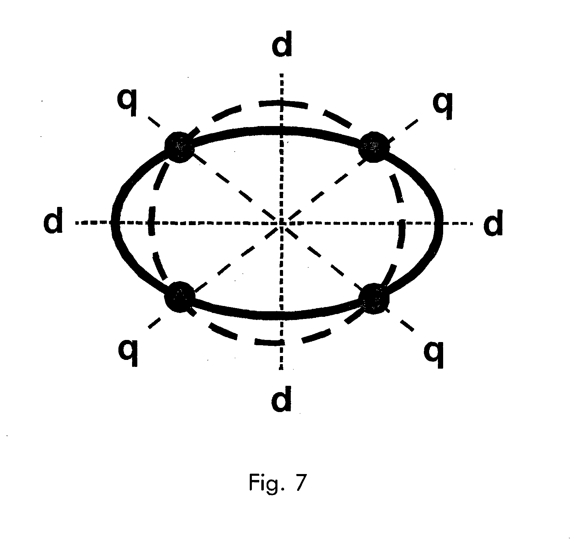

Vibrations can be detrimental for the reliability of the electric machine (in particular its winding heads 10) because they can stress the mechanical structure and the electrical insulation, impairing them and may cause mechanical and/or electrical faults.
For this reason vibrations must be monitored.
Vibrations of winding heads 10 can be monitored by providing the electric machine with vibration sensors distributed over the winding head circumference 11.
In order to track structural changes at the winding heads caused by vibrations over time, impact tests at standstill of the electrical machines are carried out and the data collected are then elaborated with an Experimental Modal Analysis (in short EMA).
With reference to Fig. 7, a traditional EMA is processed in two steps:

STEP A: The measurement process
The winding head 10 is impacted by a hammer blow (or alternatively by a shaker) at one ore more positions on the winding head 10 (traditionally called reference positions). For every impact location, the vibration of the winding head is measured at various measurement positions (i.e. 10 up to hundreds) distributed over the circumference. The evaluation of the measured force impact and structural vibration response with traditional hardware and software results in so-called receptivity values, typically with the physical dimension $\mu$m/kN. For instance a receptivity of $100\mu$m/kN means a deflection of $100\mu$m at the measurement position if impacting the structure at the reference position with 1kN. A hammer impact represents a spectrum of excitation frequencies and therefore the identified receptivity values are a function of the frequency (so-called Transfer Functions or Frequency Response Functions, in short FRFs). Shaker devices perform a single-frequency force excitation and must therefore be operated with a changing frequency (traditionally named as sweeping) in order to collect the measurement data as a function of frequency (i.e. FRF). All FRFs as obtained for various impact positions (references) and measurement positions are stored on a computer data memory to give the input for the subsequential Step B.

STEP B: The analysis process
The receptivity data as obtained in STEP A are analysed in regard to free vibration modes (i.e. vibrations, that can be present without force excitation). Such free vibration modes characterise the vibration behaviour of the winding head 10 and enable the tracking of its change over time. The analysis process is traditionally called Experimental Modal Analysis (in short EMA) and precisely described by means of mathematical operations. Commercial software packages are available on the market that support the operator with adequate algorithms.

After this EMA, the following characteristics are available for every identified free vibration mode:

- the spatial distribution of modal vibration (in short Mode Shape, in mathematics traditionally called 'Eigenvector'),
- the natural frequency (i.e. the resonance frequency of the vibration mode, (in mathematics traditionally called 'Eigenvalue'),
- the modal stiffness,
- the modal damping,
- the modal mass.

All Eigenvectors build up a system of independently possible shapes of free vibration modes.
Having the intention to identify structural changes of the winding head 10, the change of modal characteristics give a valuable indication, especially the natural frequency and the modal stiffness.
This traditional method has some drawbacks.
The measurements at standstill have the drawback that the electrical machine and especially the winding head 10 are not at operational temperature. Experienced operators are required to assess the impact of operational temperature on modal characteristics. Typically, the natural frequencies drop with operational temperature by some Hz.
Another drawback is due to fact, that not the operational vibration level is assessed, but in most cases only the natural frequency. A natural frequency close to the excitation frequency in operation (e.g. 100Hz) indicates a resonance-amplified vibration that is generally assessed to be risky.
As experience reveals, the assessment method on the basis of natural frequencies is often conservative: vibrations, even if they are amplified by structural resonance, do not endanger the mechanical integrity of the winding head 10 if the resulting operational vibration level is limited.

SUMMARY

This invention presents an alternative method for the assessment of winding head vibrations. On base of measured receptivity values, a so-called 'Operational Receptivity' is calculated. It is a measure for the structural response of the winding head 10 if electromagnetic forces are acting in operation. This method has a number of advantages as explained in the following.
This assessment method can be applied at standstill of the machines and does not require the installation of a vibration monitoring system and sensors. But it directly results in the operational receptivity that is a measure for the operational vibration behaviour of the winding head 10.
This method does not require the analysis of modal values, but it relies on the measured FRFs (as obtained in STEP A of the traditional EMA). The effort for EMA is omitted.
The assessment of vibrations of the winding head 10 by means of natural frequencies relies on a subjective perception of the excitability. That means the operator is assessing whether operational forces can excite a mode shape or not. The calculation of the operational receptivity, as part of this invention, takes into consideration the excitability and therefore provides a more objective assessment criterion.
The operational vibration level can be calculated with the knowledge of the integrated force over half of a magnetic pole. The electromagnetic force can be estimated or derived from experience. There is no requirement to calculate the detailed spatial distribution of electromagnetic forces by means of an extensive numerical Finite Element analysis. The according effort of simulation is omitted.
The resulting operational receptivity depends on the rotation direction of the electromagnetic force. A direct evaluation of the measured receptivity values (as traditionally obtained in PHASE A of an EMA) cannot result in this information that in contrast is required for assessment.
The resulting operational receptivity is also function of frequency (because it is originated from the measured FRFs). The impact of operational temperature can be considered by evaluating the operational receptivity for a frequency that is slightly higher than the excitation frequency (e.g. 100Hz).

The operational receptivity as a function of frequency allows the estimation of future vibration levels. A degradation of the winding head structure goes along with a drop of natural frequency by some Hz. With the according knowledge of this frequency drop over time, the future operational vibration level can be estimated by evaluating the operational receptivity for slightly higher frequency values as identified to be valid for operational temperature (see above).

The method can be fully automated, such that the winding head 10 can be assessed in regard to its vibration at operational condition on base of measurement data obtained when the electrical machines is out of operation.

The operators only have to follow fixed measurement procedures and then run an automated evaluation algorithm; such a highly automated method is thus particularly advantageous for highly frequency usages, as required for example for quality monitoring.

The technical aim, together with these and further aspects, are attained according to the invention by providing a method in accordance with the accompanying claims.

Advantageously, the method allows also the influence of the operational forces to be considered in a substantially simply way.

## BRIEF DESCRIPTION OF THE DRAWINGS

Further characteristics and advantages of the invention will be more apparent from the description of a preferred but non-exclusive embodiment of the method illustrated by way of non-limiting example in the accompanying drawings, in which:

Figures 1 and 2 are schematic views of a synchronous electric machine such as an electric generator;
Figure 3 is a longitudinal section of a particular of a winding head and in addition the axial positions of 'Measurement Plane' M1 (close to the iron core), measurement plane M2 (in the axial centre of the winding head) and measurement plane M3 (at the bar ends);
Figure 4 shows an enlarged view similar to figure 2 and in addition showing the impact and measuring positions as well as the rotation directions R and C;
Figures 5 and 6 shows the operational receptivity versus the frequency of the forces acting on the winding heads; and
Figure 7 shows the axes d and q in relationship to a four-node vibration deformation of the winding head (as it is relevant for 2-pole machines).

## DETAILED DESCRIPTION OF EMBODIMENTS OF THE INVENTION

## OPERATIONAL RECEPTIVITY

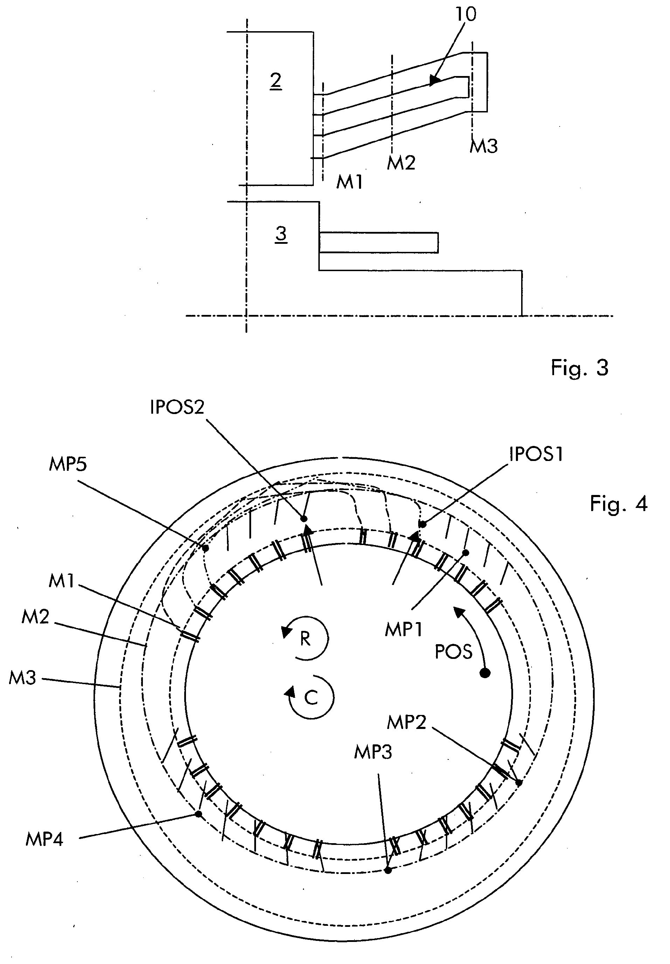

The calculation method results in the operational receptivity as a function of frequency, evaluated for two possible directions of spin of exciting force. The operational receptivity is a value with the typical dimension $\mu$m/kN (according SI standard: m/N $* 10^{-9}$) and is characteristic for the structure dynamics of the winding head 10. It represents a radial deflection of the winding head at the bar end (in the plane M3 with reference to Fig. 3 respectively at the circumference 11 with reference to figures 1 and 2) (with the dimension $\mu$m) if a force rotating wave is acting in operation with a certain integrated force over half of a magnetic pole (with the dimension kN) having a certain direction of rotation R or C (with reference to Fig. 4).

Thus, for example, an operational receptivity of 100 $\mu$m/kN for a synchronous generator indicates a deflection of 100 $\mu$m of the stator winding ends, if an operational force rotating wave integrated over half of a magnetic pole of 1 kN acts on them.

A beneficial aspect of the invention is the very practical definition of the operational receptivity that allows the assessment of operational vibration behaviour without the requirement for an extensive simulation of operating force distribution (e.g. by Finite Element Method).

In addition, the assumption of an electromagnetic force distribution and the consideration of the spin of forces (i.e. the rotation direction of the electromagnetic force wave travelling around the circumference 11 of the winding head 10) strongly contributes to an improved assessment of vibration behaviour by means of measurement data obtained at standstill.

## DEVICE

The method can be implemented to calculate the operational receptivity of a winding head of any electric machine having a component immersed in rotating magnetic field.

For example, the winding heads 10 can be defined by:

- the stator windings of a synchronous machine (this example is shown in figures 1 and 2),
- the stator and rotor windings of an asynchronous machine,
- the rotor windings of a DC machine,
- the stator and/or rotor windings of an electronic machine,
- the stator and rotor windings of an electromagnetic clutch.

In the following particular reference to the synchronous machine (such as an electric generator) shown in figures 1 and 2 and described above is made.

METHOD

According to the method, first measurements of receptivity values (in form of Transfer Functions or Frequency Response Functions, in short FRFs) are carried out on the winding head 10 at different positions (as it is traditionally performed for the purpose of an EMA, as describedfor STEP A above).

In this respect the following steps are implemented.

STEP 1

A first impact test is carried out; in this respect one winding head 10 is impacted (impact test for example by hammer or shaking, the impact shall be in radial direction) at a first impact position IPOS1.

Then receptivity values R1 indicative of the winding head deformation are measured at a plurality of measuring positions MP1-MP5 distributed preferably uniformly over the winding head circumference (i.e. over the stator circumference 11 and/or rotor circumference according to the electric machine, in the example they are distributed over the stator circumference 11). These values are often measured in three directions (radial, tangential and axial), but only one of them (radial) is used for calculations; i.e. the values are measured in the radial direction with respect to the longitudinal axis of the electric machine. Typically, the values are measured as vibration accelerations, afterwards twice integrated over time (to derive a deflection with the dimension $\mu$m) and then divided by the impacting force (with the dimension kN). The resulting values R1 define the local receptivity at the measurement position. In other words, in the first step the receptivity at each first measuring position MP1-MP5 is identified on the basis of the impact at the first impact position IPOS1. Each receptivity calculated this way is usually a complex number (representing the magnitude and time phase).

Often more then one impact for every measurement location is carried out and an average of the values measured at each position is made (to increase accuracy).

With reference to figures 3, the measurement can be obtained in more than one measurement plane (for example M1, M2, M3). The measurement positions within a plane are preferably uniformly distributed over the winding head circumference 11 (with reference to figure 4). The total number of measuring positions within a certain plane can be different from that of another plane.

With regard to the method of this invention, some preconditions should preferably be fulfilled:

- the number of measurement positions in a plane must be sufficient to sample the vibration shapes,
- the measurement must be preferably carried out in the plane M3 (close to the bar ends),
- the impact location IPOS1 is preferably in the measurement plane M3 (close to the bar ends), but can also be another arbitrary plane (M1, M2 or another not denoted plane) if measurements in that impact plane are required.

STEP 2

During the second step a second impact position IPOS2 is chosen in the same measurement plane as IPOS1 and, with the same procedure already described for the step 1, the local receptivity R2 at each measuring position MP1-MP5 is measured on the basis of the impact at the second impact position IPOS2 (i.e. the measuring positions MP1-MP5 associated to the second impact position IPOS2 are the same as the measuring positions MP1-MP5 associated to the first impact position IPOS1); thus the measuring positions MP1-MP5 during the first impact test and the second impact test are the same.

Also in this case, each local receptivity R2 is typically a complex number.

The most relevant vibration modes are those with p/2 periods over the circumference (p = number of magnetic poles). The second impact position must therefore be preferably shifted in space by 90 degrees divided by p (i.e. 45 degree for a two-pole generator with p=2) with respect to the first impact position, such that in the unfortunate case in which the receptivity caused by the impact at first impact position is very small (i.e. the deflections are very small because the vibration mode was excited close to a zero-deflection position), the receptivity (i.e. deflections) caused by the impact at the second impact position are large (and vice versa).

In addition, also tests with further impact positions can be carried out to increase accuracy; two impact tests are the minimum number of tests for implementing the method since two impact tests allow the vibration behaviour of the winding heads 10 to be studied in regard to rotation direction of operating forces.

STEP 3

The receptivity values R1 and R2 ascertained in step 1 and step 2 are available as FRFs (i.e. as functions of the frequency) and are elaborated in Step 3 according to a spatial Fourier analysis. That means the spatial distribution of receptivity is analysed in regard to its harmonic content. The resulting Fourier-components (or short 'harmonics') represent a sinusoidal distributed receptivity with the order (i.e. periodicity) of ORDER = 0, 1, 2, 3 etc. The order of 1 means one period of a sinus-function in regard to the angular coordinate POS (with reference to Fig. 4), the order 0 means a constant, not varying receptivity in regard to the angular coordinate POS.

The measured receptivity values R1 (as obtained in STEP1) are complex numbers (representing a magnitude and phase) and result therefore in two Fourier components for every order having two different rotation directions R and C (with reference to figure 4). These two Fourier components can be interpreted as two counter rotating waves of receptivity that result with their complex sum to a rotating or non-rotating receptivity wave, as it is can be characteristic for the structure dynamics of the winding head 10.

According to the method, two receptivity waves (i.e. two waves of receptivity rotating in opposite directions R and C) are calculated for every order (i.e. ORDER = 0,1,2,3) on the basis of receptivity values as obtained with the first impact IPOS1 according to the formulas

$$RWR1(ORDER)=\begin{cases}\dfrac{1}{M}*\displaystyle\sum_{m=1}^{M} R1_m \cdot e^{j*ORDER*MPOS_m} &,\text{for } ORDER>0 \\[4mm] \dfrac{1}{2*M}*\displaystyle\sum_{m=1}^{M} R1_m &,\text{for } ORDER=0\end{cases}$$

$$RWC1(ORDER)=\begin{cases}\dfrac{1}{M}*\displaystyle\sum_{m=1}^{M} R1_m \cdot e^{-j*ORDER*MPOS_m} &,\text{for } ORDER>0 \\[4mm] \dfrac{1}{2*M}*\displaystyle\sum_{m=1}^{M} R1_m &,\text{for } ORDER=0\end{cases}$$

wherein

RWR1 and RWC1 are the resulting complex numbers, each of them representing the receptivity wave in R and C direction (with reference to figure 4) and the parameter in brackets denote the dependency from the order of harmonic, M is the total number of measurement positions around the circumference 11 of the winding head 10 (with reference to the figures 3 and 4),

m is the index of the measurement position (i.e. m=1 for MP1, m=2 for MP2 etc.),

$MPOS_m$ is the angular coordinate POS (with reference to figure 4) of the measurement position m in the according measurement plane (with reference to figure 3) with the dimension Radiant,

$R1_m$ is the complex value of receptivity with the dimension $\mu$m/kN as measured at the measurement position m,

j is the imaginary unit $j = \sqrt{-1}$, and

e is the Euler function, namely:

$$e^{jx} = \cos(x) + j*\sin(x) .$$

As $R1_m$ is available from measurements as a function of frequency, also RWR1 and RWC1 are functions of frequency. These two values can be used to estimate the contribution of a spatial harmonic with a certain order to the local receptivity at a given position POS. For this purpose a mathematical function with the arguments POS and ORDER is defined, such as

$$RH1(POS,ORDER) = RWR1 * e^{-j * ORDER * POS} + RWC1 * e^{j * ORDER * POS}$$

wherein RH1 is the local receptivity at the angular position POS (with reference to figure 4) due to one single harmonic component with the order ORDER = 0,1,2,3 over the circumference 11 of the winding head 10. In particular, if the complex numbers RWR1 and RWC1 have the same absolute value (i.e. the same magnitude), the local receptivity values RH1 (as evaluated at different positions POS) results in a non-rotating wave. If RWC1 is zero, they represent a rotational wave in R direction (with reference to figure 4), if RWR1 is zero they represent a rotation wave in C direction.

The complex numbers RWR1 and RWC1 and the complex function RH1 is valid for local receptivity values R1 as measured with the impact location IPOS1 in STEP1. Further complex numbers RWR2 and RWC2 and a further complex function RH2 are obtained by using the receptivity values $R2_m$ measured with the impact location IPOS2 in STEP2. The formulas applied for RWR2, RWC2 and RH2 are according to those used for impact location IPOS1, as they are:

$$RWR2(ORDER) = \begin{cases} \dfrac{1}{M} * \displaystyle\sum_{m=1}^{M} R2_m \cdot e^{j * ORDER * MPOS_m} & ,\text{for } ORDER > 0 \\[2em] \dfrac{1}{2*M} * \displaystyle\sum_{m=1}^{M} R2_m & ,\text{for } ORDER = 0 \end{cases}$$

$$RWC2(ORDER) = \begin{cases} \dfrac{1}{M} * \displaystyle\sum_{m=1}^{M} R2_m \cdot e^{-j * ORDER * MPOS_m} & ,\text{for } ORDER > 0 \\[2em] \dfrac{1}{2*M} * \displaystyle\sum_{m=1}^{M} R2_m & ,\text{for } ORDER = 0 \end{cases}$$

$$RH2(POS,ORDER) = RWR2 * e^{-j * ORDER * POS} + RWC2 * e^{j * ORDER * POS}$$

wherein the measurement positions $MPOS_m$ are the same as those used before when calculating RWR1 and RWC1. $R2_m$ is the complex value of receptivity with the dimension μm/kN as measured at the measurement position m when impacting at the position IPOS2.

The most relevant harmonic content for the measured receptivity has an order:

$$RORDER = p$$

wherein p is the number of magnetic poles of the electric machine. An electric machine with two magnetic poles results therefore in RORDER = 2 that represents a sinusoidal distributed receptivity with 4 nodes as it is solely present with pure 4-node vibration modes.

The method described with this invention assumes that the electromagnetic forces are with a predominant spatial harmonic with the order p. Moreover, only the radial component of electromagnetic forces is considered. Higher orders and axial or tangential components are also present in the force distribution, but with much lower impact on operational vibration level and therefore neglected. The harmonic of receptivity with the same order RORDER = p leads in operation to a spatial distribution of vibration velocity equal to that one of electromagnetic forces. Therefore, the product of radial vibration velocity and radial electromagnetic force (as integrated over the circumference 11) leads to an electromechanical power transfer that enables the operational vibration of the winding head 10.

During operation modes whose complex numbers RWR1(RORDER) and RWC1(RORDER) are zero (or a very small absolute value in relationship to those of the other orders) cannot be excited at the excitation frequency (e.g. 100Hz).

For instance a two pole machine (p = 2) has the relevant order RORDER = 2. A two-node mode of the winding head 10 has one single harmonic having the order ORDER = 1 that is unequal to the relevant order RORDER and cannot be excited. But a four-node mode of the winding head 10 has one single harmonic having the order ORDER = 2 that is equal to the relevant order RORDER and can therefore be excited.

Further functions are defined, that indicates the angular coordinate POS (with reference to figure 4) of the maximal local receptivity of the harmonic with the relevant order RORDER:

$$DPOS1 = \frac{1}{2*RORDER}*\left(ARG\left(RWR1(RORDER)*CONJ(RWC1(RORDER))\right)\right),$$

$$DPOS2 = \frac{1}{2*RORDER}*\left(ARG\left(RWR2(RORDER)*CONJ(RWC2(RORDER))\right)\right),$$

wherein

$$DPOS1+n*\frac{\pi}{RORDER} \;,n=0,1,2,...(2*RORDER-1),$$

$$DPOS2+n*\frac{\pi}{RORDER} \;,n=0,1,2,...(2*RORDER-1)$$

are the angular positions of the maximal receptivity for impact location IPOS1 respectively IPOS2 (D is the symbol for 'direct', see illustration in Figure 7),

ARG(X) is a function, that calculates the argument of a complex number (i.e. the angle of a complex number in the Euler plane),

CONJ(X) is a function, that calculates the conjugate complex value of X (i.e. CONJ(Y+j*Z)= Y-j*Z).

According functions are defined for the local receptivity at a position with an angular shift of 90degrees/RORDER:

$$QPOS1 = DPOS1 + \frac{\pi}{2*RORDER}$$

$$QPOS2 = DPOS2 + \frac{\pi}{2*RORDER}$$

wherein

$$QPOS1+n*\frac{\pi}{RORDER} \;,n=0,1,2,...(2*RORDER-1),$$

$$QPOS2+n*\frac{\pi}{RORDER} \;,n=0,1,2,...(2*RORDER-1)$$

are the angular positions of the maximal receptivity for impact location IPOS1 respectively IPOS2 (Q is the symbol for 'quatrature'). Whereas DPOS1 and DPOS2 indicate the position of the maximal local receptivity, the positions QPOS1 and QPOS2 indicate the locations with minimal local receptivity. In the case of a non-rotating wave, the positions QPOS1 and QPOS2 are at the node-positions with a receptivity of (nearly) zero as illustrated with Figure 7.

As RWR1, RWC1 (respectively RWR2 and RWC2) are available for different frequencies, also the values RH1 (and RH2), DPOS1 (and DPOS2) and QPOS1 (and QPOS2) are available as a function of frequency. Moreover, all these numbers (and functions) are available for all measurement planes (with reference to figure 3). These numbers (and functions) are at least available in the measurement plane M3 and the measurement plane of impact location (that can be the same). In the following, MPI denotes the measurement plane of impact location. It has to be the same for both impact locations IPOS1 and IPOS2.

With regard to the physics described above, the complex numbers RWR1(RORDER) and RWC1(RORDER) respectively RWR2(RORDER) and RWC2(RORDER) predominantly define the operational vibration behaviour.

A number of corrective factors are calculated in the following process steps.

STEP 4

A factor for the correction of a non-optimal first impact location IPOS1 (with reference to the coordinate system POS in Figure 4) is calculated; it is indicative of the receptivity that would have been ascertained with an optimal impact at a position having the maximum radial deflection. This factor is calculated on the basis of the receptivity waves of the relevant harmonic order as available after STEP 3 with RWR1(RORDER) and RWC1(RORDER) respectively RWR2(RORDER) and RWC2(RORDER).

With consideration of the power transfer at the impact location, the correction factor for non-optimal impact location is a complex number that is calculated by:

$$CORRD1 = CONJ\left( \frac{RH1(DPOS1, RORDER)\Big|_{MPI}}{RH1(IPOS1, RORDER)\Big|_{MPI}} \right)$$

wherein

CORRD1 is a complex correction factor (valid for the evaluation of the measurement data as obtained with the impact location IPOS1 according STEP1), that enables the extrapolation of the maximum measured receptivity (in the d-axis) to the theoretical one, which would have been obtained with an optimal impact location at this location of maximum (i.e. DPOS1),

CONJ(X) is a function, that calculates the conjugate complex value of X (i.e. CONJ(Y+j*Z)= Y-j*Z),

IPOS1 is the angular position of the impact as applied in STEP1 in the coordinate system POS (with reference to figure 4),

$$RH1(IPOS1, RORDER)\Big|_{MPI}$$

is the local receptivity (in compliance with the measurement data obtained in STEP1) at the impact location IPOS1 (in the measurement plane MPI) with regard to one single harmonic with the relevant order RORDER, and

$$RH1(DPOS1, RORDER)\Big|_{MPI}$$

is the maximal local receptivity in the measurement plane MPI (in compliance with the measurements obtained in STEP1) with regard to one single harmonic with the relevant order RORDER.

As the factor CORRD1 is valid for the correction of the receptivity in the d-axis (with reference to Figure 7), an according factor is calculated for the correction of the receptivity in the q- axis:

$$CORRQ1 = CONJ\left( \frac{RH1(QPOS1, RORDER)\Big|_{MPI}}{RH1(IPOS1, RORDER)\Big|_{MPI}} \right)$$

wherein

CORRQ1 is a complex correction factor (valid for the evaluation of the measurement data as obtained with the impact location IPOS1 according STEP1), that enables the extrapolation of the minimum measured receptivity to the theoretical one, which would have been obtained with an optimal impact location at this location of minimum (i.e. at QPOS1).

The functions RH1 are again obtained for the measurement plane MPI (where the impact is performed).

STEP 5

Correction-factors for non-optimal impact location are calculated as already indicated in step 4, but for the second impact location IPOS2:

$$CORRD2 = CONJ\left( \frac{RH2(DPOS2, RORDER)\big|_{MPI}}{RH2(IPOS2, RORDER)\big|_{MPI}} \right)$$

$$CORRQ2 = CONJ\left( \frac{RH1(QPOS2, RORDER)\big|_{MPI}}{RH1(IPOS2, RORDER)\big|_{MPI}} \right)$$

The functions RH2 are again valid for the measurement plane MPI (where the impact is performed).

STEP 6

The method of this invention assesses the two measurement data sets as obtained in STEP1 and STEP2 in regard to their reliability. Both datasets can lead to different evaluation results as obtained in STEP3 and STEP4. The information of both datasets are firstly evaluated separately and than merged to gain more reliable evaluation results. With this intention, so-called trust values are calculated, that are scalar numbers between 0 and 1. A low trust value close to 0 expresses a low reliability of the dataset for the intended evaluation position, and a high trust value close to 1 expresses a high reliability for this evaluation position.

In particular when evaluating the maximal local receptivity in the d-axis (with reference to Figure 7), the trust is high if impacting the winding head 10 at an angular position POS (in reference to figure 4), that is close by the location of maximum (i.e. DPOS1). It is obviously low, if impacting it close to a node position (i.e. QPOS1). The trust is determined by means of the complex numbers RWR(RORDER) and RWC(RORDER) that are valid for the spatial harmonic with the relevant order RORDER (i.e. the 4-node harmonic in case of an electric machine with two magnetic poles).

There are several possibilities to obtain a trust value. One possible implementation of the trust value is based on the mathematical derivative of correction factors, namely

$$TRUSTD1 = \frac{1}{1 + \frac{1}{RORDER} \cdot ABS\left( \frac{\partial CORRD1}{\partial IPOS1}\bigg|_{IPOS1} \right)}$$

wherein

TRUSTD1 expresses the reliability for the extrapolation of maximal receptivity for the measurement data as obtained in STEP1 with the impact location IPOS1,

$$\frac{\partial}{\partial IPOS1}$$

is the mathematical derivative in regard to the impact position IPOS1 and

$$\left.\frac{\partial CORRD1}{\partial IPOS1}\right|_{IPOS1}$$

is the local value of the derivative of CORRD1 at the impact location IPOS1, and

ABS(X) is the function for the absolute value of a complex number $X = Y+j*Z$ resulting in the value $X^2+Y^2$.

Further trust values can be accordingly calculated for the remaining correction factors as available after STEP4, namely:

$$TRUSTQ1 = \frac{1}{1+\dfrac{1}{RORDER}\cdot ABS\left(\left.\dfrac{\partial CORRQ1}{\partial IPOS1}\right|_{IPOS1}\right)}$$

$$TRUSTD2 = \frac{1}{1+\dfrac{1}{RORDER}\cdot ABS\left(\left.\dfrac{\partial CORRD2}{\partial IPOS2}\right|_{IPOS2}\right)}$$

$$TRUSTQ2 = \frac{1}{1+\dfrac{1}{RORDER}\cdot ABS\left(\left.\dfrac{\partial CORRQ2}{\partial IPOS2}\right|_{IPOS2}\right)}$$

With the values as defined above, the trust is low for impact location IPOS1 if the trust is high for impact location IPOS2 and vice versa. This suggests the adequate angular distance of impact locations as described above for STEP2.

As the correction factors CORRD1, CORRD2 and CORRQ1, CORRQ2 are available for different frequencies, also all trust values are available as a function of frequency. And as the correction factors are generally valid for the measurement plane MPI of the impact position, the evaluation of trust is also obtained in the measurement plane MPI. Moreover, only the relevant order RORDER of all harmonics is considered.

STEP 7

In order to identify the coupling of the harmonics, as it is typically present with mixed modes, the maximum receptivity of all harmonics is analysed in regard to their dependency from the frequency. The so-called 'modal coupling' factors for each harmonic and frequency MC is calculated in certain frequency ranges around those frequencies that are supposed to be with resonance amplified magnitude.

With the first sub-step, a set of N frequencies is selected (e.g. by the operator) as valid for the measurement data as obtained with the first impact position IPOS1. It is afterwards given with

$$FNAT1_n \quad , \quad n = 1, 2, \ldots, N$$

N is the total number of pre-selected frequencies, n is the index of frequency. The values of FNAT are typically in the range of 20 .. 200 Hz.

In a second sub-step, a certain frequency range around these frequencies is defined with a predefined frequency span DF (e.g. 10Hz).

In a third sub-step, the spatial harmonic with the relevant order RORDER is approximated with a curve fitting method within the selected frequency ranges $FNATI_n \pm 0.5*DF$. Afterwards, a set of so-called 'resonance functions' are available:

$$RF1(n,f) \quad , \quad n = 1,2, \ .., \ N$$

wherein

n is the index of the natural frequency (as selected before), and
f is the frequency.

The curve fitting must achieve that every resonance function RF1(n,f) is an approximation for the resonance amplification that is due to the supposed natural frequency $FNAT1_n$, and furthermore that the sum of all resonance curves

$$RAPPROX1(f) = \sum_{n=1}^{N} RF1(n,f)$$

is a good approximation of the receptivity harmonic with the relevant order RORDER as available after STEP3:

$$RMEASURED1(f) = ABS(RWR1(f)) + ABS(RWC1(f))$$

wherein

ABS(X) is the function for the absolute value of a complex number X = Y+j*Z resulting in the value X**2+Y**2, and RWR1(f) respectively RWC1(f) the complex values as obtained in STEP3 as RWR1(RORDER) respectively RWC1(RORDER), but discussed with their dependency from frequency f.

In a fourth sub-step, correlation factors CI are calculated for every frequency ranges $FNAT1_n \pm 0.5*DF1$ as pre-selected:

$$C1(ORDER,n) = \frac{ABS\left( \int_{f=FNAT_n-0.5^*DF}^{FNAT_n-0.5^*DF} RH1(DPOS1,ORDER) * CONJ\left(RH1(DPOS1,RORDER)\right) df \right)}{\int_{f=FNAT_n-0.5^*DF}^{FNAT_n-0.5^*DF} ABS\left(RH1(DPOS1,ORDER)\right) * ABS\left(RH1(DPOS1,RORDER)\right) df}$$

wherein

CI(ORDER,n) is the scalar value of the correlation factor for every harmonic of receptivity as valid for measurement data as obtained in STEP1 with impact location IPOS1,

$$\int_{f=FNAT_n-0.5^*DF}^{FNAT_n-0.5^*DF} x(f) \ df$$

is the numerical integration of the complex function x(f) over the frequency range DF1 around the frequency FNAT, CONJ(X) is a function, that calculates the conjugate complex value of X (i.e. CONJ(Y+j*Z)= Y-j*Z), RH1(POS,ORDER) is the local receptivity at the angular position POS (with reference to figure 4) in the measurement plane MP1 due to one single harmonic component with the order ORDER as available after STEP3 of the method, DPOS1 is the angular position of the maximal receptivity with regard to the harmonic of relevant order RORDER as available after STEP3 of the method for the measurement data obtained with impact location IPOS1 in STEP1.

The scalar value of the correlation factor C1(RORDER,n) is always in the range between 0 and 1. In particular, the correlation factor C1(RORDER,n) is always 1.

In a fifth sub-step, the modal coupling MC1 is calculated for every harmonic order and for every frequency (i.e. typically in the range from 20 up to 200Hz):

$$MC1(ORDER,f) = \frac{\sum_{n=1}^{N} C1(ORDER,n)*RF1(n,f)}{\sum_{n=1}^{N} RF1(n,f)}$$

wherein

MC1(ORDER,f) is a scalar value for the modal coupling of a certain harmonic (as indicated with ORDER) as a function of frequency f,
C1(ORDER,n) is the scalar value of the correlation factor as obtained in the fourth sub-step, and
RF1(n,f) is the approximated resonance function as obtained in the third sub-step.

The modal coupling MC1 is available after this STEP7 for every harmonic and frequency. It is valid for the measurement data as obtained in STEP1 of the method with the impact position IPOS1.

STEP8

The modal coupling factors MC2, as it is valid for the measurement data as obtained in STEP2 for the impact position 2, are calculated in an analogue way as described in STEP7. It is calculated for every harmonic and frequency.

STEP 9

A further correction factor is calculated for the consideration of a reduced operational excitability of so-called 'mixed modes'.

Mixed modes are to be distinguished from 'pure modes', that goes along with a sinusoidal distributed receptivity over the circumference. In other words, pure modes have one single harmonic component unequal to zero. For example a 4-node pure mode is characterised by the non-zero harmonic with the order 2 and harmonics with the orders 0,1, 3,4,5 etc equal to zero. Mixed modes have various non-zero harmonics with different orders. Mixed modes are typically with two non-zero harmonics. For example the 2/4-node mode is with harmonics having the orders 1 and 2.

As described above in STEP 3, the spatial harmonic of receptivity with the order RORDER = p is the only one that is assumed to be relevant for the electromechanical power transfer from the electromagnetic field to the mechanical structure. That is also valid for the excitation of mixed modes during operation.

The force excitation during measurement (as described with STEP1 and STEP2) is much different to the operational excitation because it is locally applied. As it is well known from the traditional theory of structure dynamics, a locally applied force transfers mechanical power to all spatial harmonics.

Mixed modes have therefore a lower excitability during operation than measured. Whereas the power transfer during measurement involves all spatial harmonics, the power transfer during operation uses only the relevant order RORDER = p.

Based on the law for energy conservation, the so-called 'grade of operational excitability' (GOE) can be calculated as follows:

$$GOE1 = \frac{1}{SQRT\left(\sum_{ORDER=0}^{3} MC1(ORDER)\right)}$$

wherein:

GOE1 is the grade of operational excitability,
MC1(ORDER) is the modal coupling of certain harmonic as available after STEP7 of this method (with MC1(RORDER)=1),
SQRT(X) is the function that returns the square root of the scalar number x (i.e. $(SQRT(X))^2 = X$).

An according grade of operational excitability is calculated for the measurement data as obtained in STEP2 with the impact location IPOS2, as it is

$$GOE2 = \frac{1}{SQRT\left(\sum_{ORDER=0}^{3} MC2(ORDER)\right)} \quad .$$

STEP 10

Further correction factors are calculated in order to consider the axial position of the measurement plane MPI of the impact.

The radial electromagnetic forces act in operation distributed over the whole winding head 10. As described above, the method (as described with this invention) assumes a pure sinusoidal distribution of the operational forces over the circumference 11 (with reference to figure 2). Moreover, the radial electromagnetic forces are distributed in axial direction in a typical manner with a maximum at about the axial centre of the winding head 10, approximately at the measurement plane M2 (with reference to figure 3). It can be assumed for the application of the method that the electromagnetic forces act in a concentrated manner at the axial centre of the winding head 10, approximately at the measurement plane M2. This representative axial position can be accurately determined by Finite Element Simulations taking into account the distribution of electromagnetic forces and the structural deformation of the winding head.

In the following, this axial position and the according plane are referred to with the measurement plane of operating force MPOF. It can be assumed to be at or close to M2 (with reference to figure 3).

A correction factor for the axial position of the plane MPI as it is deviant from that of MPOF is calculated in STEP10, as it is defined by

$$CORRPOF1 = CONJ\left(\frac{RH1(IPOS1,RORDER)\big|_{MPOF}}{RH1(IPOS1,RORDER)\big|_{MPI}}\right)$$

wherein

$$RH1(IPOS1,RORDER)\big|_{MPOF}$$

is the local receptivity (in compliance with the measurement data obtained in STEP1) at the impact location IPOS1 in the measurement plane MPOF with regard to the harmonic with the relevant order RORDER, and

$$RH1\bigl(IPOS1,RORDER\bigr)\Big|_{MPI}$$

is the according value at the impact location IPOS1 in the measurement plane MPOF,
CONJ(X) is a function, that calculates the conjugate complex value of X (i.e. CONJ(Y+j*Z)= Y-j*Z).

This factor can be evaluated on the basis of experience and it is typically between 0.4-0.7.
An according correction factor is calculated for the measurement data as obtained with the impact location IPOS2, if the receptivity values are also measured in plane MPOF:

$$CORRPOF2 = CONJ\left( \frac{RH2\bigl(IPOS2,RORDER\bigr)\Big|_{MPOF}}{RH2\bigl(IPOS2,RORDER\bigr)\Big|_{MPI}} \right)$$

If the plane MPOF is not included in the measurement procedure of STEP2, the same correction factor CORRPOF1 is used for both impact positions.

STEP 11

In STEP 11 of the method the information of both impact positions is merged in such a way that a reliable maximal receptivity value is obtained. Moreover, the usage of correction factors decreases the dependence of measurement result from the possible variances with individual measurement procedures.
According to STEP11 of the method, a reliable maximal receptivity is obtained by means of weighted average and corrected counter rotating waves of receptivity (as they are obtained in STEP3):

$$RWRD = ROT1 * \frac{TRUSTD1 * CORRD1 * GOE1 * CORRPOF1}{TRUSTD1 + TRUSTD1} * RWR1\bigl(RORDER\bigr)$$
$$+$$
$$ROT2 * \frac{TRUSTD2 * CORRD2 * GOE2 * CORRPOF2}{TRUSTD2 + TRUSTD1} * RWR2\bigl(RORDER\bigr)$$

Wherein

RWRD is a complex number representing the rotational wave of receptivity with the rotation direction R (with reference to figure 4) that is reliable in regard to the maximal receptivity (D is the symbol for 'direct'),
ROT1, ROT2 are representing complex numbers with the absolute value 1 that are acting as turners, i.e.

$$ROT1 = e^{j*RORDER*IPOS1}, \quad ROT2 = e^{j*RORDER*IPOS2}$$

TRUSTD1, TRUSTD2 are scalar values representing the trust for the extrapolation to maximum (as available after STEP6),
**[0107]** CORRD1, CORRD2 are complex values for the correction of non-optimal impact position (as evaluated in STEP4, STEP5),
**[0108]** GOE1, GOE2 are scalar factors for the reduction of operational excitability of mixed modes (as evaluated in STEP9),
**[0109]** CORRPOF1, CORRPOF2 complex factors for the consideration of the axial position of impact plane MPI (as evaluated in STEP10), and
RWR1(RORDER), RWR2(RORDER) are complex numbers representing the rotational receptivity wave in R direction (as evaluated in STEP3).
Accordingly, a reliable rotational wave of receptivity with the rotation direction C (with reference to figure 4) is

obtained:

$$RWCD = ROT1 * \frac{TRUSTD1 * CORRD1 * GOE1 * CORRPOF1}{TRUSTD1 + TRUSTD1} * RWC1(RORDER)$$

$$+$$

$$ROT2 * \frac{TRUSTD2 * CORRD2 * GOE2 * CORRPOF2}{TRUSTD2 + TRUSTD1} * RWC2(RORDER)$$

wherein

RWC1(RORDER), RWC2(RORDER) are complex numbers representing the rotational receptivity wave in C direction (as evaluated in STEP3).

The reliable angular position of the maximal receptivity is indicated by the value

$$DPOSR = \frac{1}{2 * RORDER} * ARG\left(RWRD * CONJ\left(RWCD\right)\right),$$

wherein

DPOSR is the angular position of the maximal receptivity in the coordinate system POS (with reference to figure 4), ARG(X) is a function, that calculates the argument of a complex number (i.e. the angle of a complex number in the Euler plane),
CONJ(X) is a function, that calculates the conjugate complex value of X (i.e. CONJ(Y+j*Z)= Y-j*Z).

The reliable maximal receptivity in the 'direct' axis (at the position DPOSR) is calculated with

$$RD = RWRD * e^{-j * RORDER * DPOSR} + RWCD * e^{j * RORDER * DPOSR}$$

wherein

RD is a complex number representing the magnitude and phase of the reliable maximal receptivity in the 'direct' axis as a function of frequency,
RWRD, RWCD are complex numbers representing the reliable rotational waves of receptivity, and
DPOSR is the reliable direction of the maximal receptivity.

STEP 12

The reliable minimal receptivity is calculated in an analogue way as the reliable maximal receptivity. The according formulas are given with

$$RWRQ = ROT1 * \frac{TRUSTQ1 * CORRQ1 * GOE1 * CORRPOF1}{TRUSTD1 + TRUSTD1} * RWR1(RORDER)$$

$$+$$

$$ROT2 * \frac{TRUSTQ2 * CORRQ2 * GOE2 * CORRPOF2}{TRUSTD2 + TRUSTD1} * RWR2(RORDER)$$

and

$$RWCQ = ROT1 * \frac{TRUSTQ1 * CORRQ1 * GOE1 * CORRPOF1}{TRUSTD1 + TRUSTD1} * RWC1(RORDER)$$

$$+$$

$$ROT2 * \frac{TRUSTQ2 * CORRQ2 * GOE2 * CORRPOF2}{TRUSTD2 + TRUSTD1} * RWC2(RORDER)$$

Wherein

RWRQ is a complex number representing the rotational wave of receptivity with the rotation direction R (with reference to figure 4) that is reliable in regard to the minimal receptivity (Q is the symbol for 'quadrature'),
ROT1, ROT2 represent complex numbers with the absolute value 1 that are acting as turners, i.e.

$$ROT1 = e^{j * RORDER^* IPOS1}, \quad ROT2 = e^{j * RORDER^* IPOS2}$$

wherein IPOS1 and IPOS2 are spatial angles measured in the coordinate system POS (with reference to figure 4).

TRUSTQ1, TRUSTQ2 are scalar values representing the trust for the extrapolation to minimum (as available after STEP6),
CORRQ1, CORRQ2 are complex values for the correction of non-optimal impact position (as evaluated in STEP4, STEP5),
GOE1, GOE2 are scalar factors for the reduction of operational excitability of mixed modes (as evaluated in STEP9),
CORRPOF1, CORRPOF2 complex factors for the consideration of the impact position used for the measurement (as evaluated in STEP10), and
RWR1(RORDER), RWR2(RORDER) are complex numbers representing the rotational receptivity wave in R direction (as evaluated in STEP3).
The reliable angular position of the minimal receptivity is indicated by the value

$$QPOSR = DPOSR + \frac{\pi}{2 * RORDER}$$

where QPOSR is the angular position of the minimal receptivity in the coordinate system POS (with reference to figure 4).
The reliable minimal receptivity at the 'quadrature' direction (at the position QPOSR) is calculated with

$$RQ = RWRQ * e^{-j * RORDER * QPOSR} + RWCQ * e^{j * RORDER * QPOSR}$$

wherein

RQ is a complex number representing the magnitude and phase of the reliable minimal receptivity in the 'quadrature' direction as a function of frequency,
RWRD, RWCD are complex numbers representing the reliable rotational waves of receptivity, and
DPOSR is the reliable direction of the maximal receptivity.

STEP13

As with STEP11 and STEP12 reliable local receptivity values are obtained for the 'direct' and 'quadrature' axis, in STEP13 the operational receptivity that is valid for a rotating wave of forces is calculated.
Complex vibration modes are with a moving mode shape. It means for an impact of the winding head 10 exactly in the direct axis that the vibration response is not only in the direct axis, but also in the quadrature axis with a phase shift of $\pi/2$ respectively a time delay of a quarter period. This phenomenon leads to preferred rotation direction of vibration deformation, or in other words to a different vibration level for different rotation directions of operational force excitation.
The vibration levels in the direct axis (in short 'd') depend not only from the force excitation in the same axis, but also from the force excitation in the quadrature axis (in short q'). In order to consider this, so-called 'mutual receptivities' are calculated as functions of frequency:

$$DMUTUALQD = RWRD * e^{-j*\left(RORDER*DPOSR+\frac{\pi}{2}\right)} + RWCD * e^{j*\left(RORDER*DPOSR+\frac{\pi}{2}\right)}$$

$$DMUTUALQQ = \frac{ABS\left(DMUTUALQD\right)^2}{CONJ\left(RD\right)}$$

$$DMUTUALDQ = \frac{RD * CONJ\left(DMUTUALQD\right)}{CONJ\left(RD\right)}$$

$$QMUTUALDQ = RWRQ * e^{-j*RORDER*DPOSR} + RWCQ * e^{j*RORDER*DPOSR}$$

$$RQSTAT = RQ - QMUTUALDQ * \frac{DMUTUALQD}{RD}$$

wherein

RD and RQ are the complex numbers representing the reliable receptivity values as available after STEP11 and STEP12 of the method,

DPOSR is indicating the reliable position of the direct axis, DPOSR is the angular position in the coordinate system POS (with reference to figure 4) as available after STEP11 of the method,

ABS(X) is the function for the absolute value of a complex number $X = Y+j*Z$ resulting in the value $X^2+Y^2$, and CONJ(X) is a function, that calculates the conjugate complex value of X (i.e. CONJ(Y+j*Z)= Y-j*Z).

In order to retrieve the vibration response for a rotational excitation, the following calculation are to be performed for a rotation direction R (with reference to figure 4):

$$ORDFR = \frac{\pi*RORDER}{2} * \left( RD*e^{-j*RORDER*DPOSR} + DMUTUALDQ*e^{-j*\left(RORDER*DPOSR+\frac{\pi}{2}\right)} \right)$$

$$ORQFR = \frac{\pi*RORDER}{2} * \left( DMUTUALQD*e^{-j*RORDER*DPOSR} + DMUTUALQQ * e^{-j*\left(RORDER*DPOSR+\frac{\pi}{2}\right)} \right)$$
$$+ \frac{\pi*RORDER}{2} * RQSTAT*e^{-j*\left(RORDER*DPOSR+\frac{\pi}{2}\right)}$$

wherein

ORDFR is the maximal operational receptivity in the direct axis if exciting the winding head 10 with a force wave having the rotation direction R (with reference to figure 4),

ORQFR is the minimal operational receptivity in the quadrature axis if exciting the winding head 10 with a force wave having the rotation direction R (with reference to figure 4),

RD is the complex numbers representing the reliable receptivity values as available after STEP11 of the method,

DPOSR is indicating the reliable position of the direct axis, DPOSR is the angular position in the coordinate system POS (with reference to figure 4) as available after STEP11 of the method,

DMUTUALDQ, DMUTUALQD, DMUTUALQQ are the mutual receptivity values as already calculated in this STEP13, RQSTAT is the part of the receptivity in the quadrature axis, that is not coupled with the direct axis by the presence of a complex vibration mode; it can be equal to the static stiffness.

In an analogue way, the operational receptivity values for a force wave with the rotation direction C has to be calculated:

$$\text{ORDFC} = \frac{\pi * \text{RORDER}}{2} * \left( \text{RD} * e^{-j*\text{RORDER}*\text{DPOSR}} + \text{DMUTUALDQ} * e^{-j*\left(\text{RORDER}*\text{DPOSR} - \frac{\pi}{2}\right)} \right)$$

$$\text{ORQFC} = \frac{\pi * \text{RORDER}}{2} * \left( \text{DMUTUALQD} * e^{-j*\text{RORDER}*\text{DPOSR}} + \text{DMUTUALQQ} * e^{-j*\left(\text{RORDER}*\text{DPOSR} - \frac{\pi}{2}\right)} \right)$$

$$+ \frac{\pi * \text{RORDER}}{2} * \text{RQSTAT} * e^{-j*\left(\text{RORDER}*\text{DPOSR} - \frac{\pi}{2}\right)}$$

wherein

ORDFC is the maximal operational receptivity in the direct axis if exciting the winding head 10 with a force wave having the rotation direction C (with reference to figure 4),
ORQFC is the minimal operational receptivity in the quadrature axis if exciting the winding head 10 with a force wave having the rotation direction C (with reference to figure 4; the quadrature axis is the axis electrically perpendicular to the direct axis, i.e. the angle between the direct axis and the quadrature axis in 90 degree divided by the number of poles of the electric machine).

Typically, the absolute value of the maximal operational receptivity ORDFR respectively ORDFC (that is valid for the two different directions R and C of rotating force) is discussed as a function of frequency. For this purpose the operational receptivity is written as to be

$$R_{OP}(f) = \begin{cases} \text{ABS}\big(\text{ORDFR}(f)\big), \text{if rotation direction} = R \\ \text{ABS}\big(\text{ORDFC}(f)\big), \text{if rotation direction} = C \end{cases}$$

wherein

ABS(X) is the function for the absolute value of a complex number $X = Y + j*Z$ resulting in the value $X^2 + Y^2$, and f is the frequency.

Most interesting is the operational receptivity close to the excitation frequency (e.g. 100Hz) because it indicates the operational vibration level of the winding head 10 at operation of the electrical machine.

ESTIMATION OF VIBRATIONS FOR THE NEAR FUTURE

The operational receptivity calculated according to the method above described can be advantageously used to get an idea of vibrations of the winding heads 10 at least in the near future, such that useful information for inspections, detection and correction of defects can be gained.
Natural frequencies typically decrease with ageing.

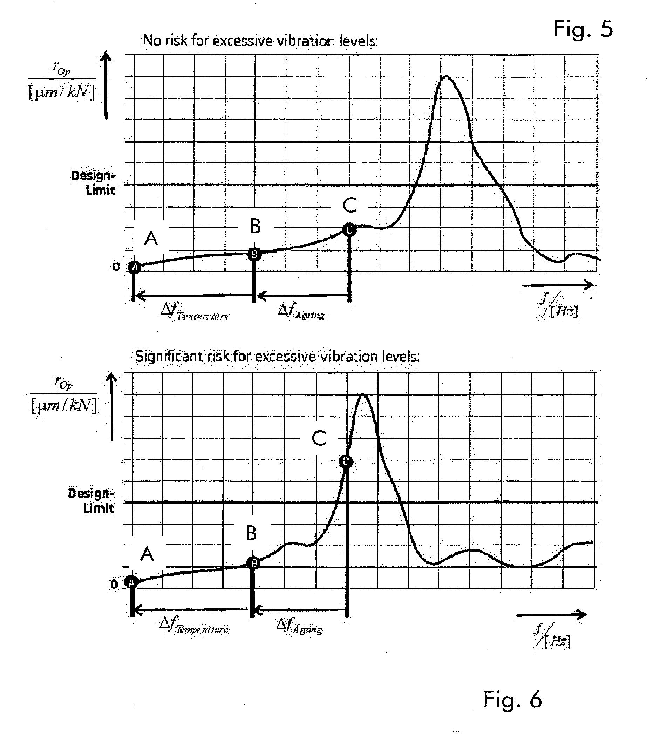

Figures 5 and 6 show the operational receptivity $r_{OP}$ versus frequency of excitation (calculated typically at ambient temperature).
The excitation frequency at operation is $f_0$ (reference A); this indicates the operational receptivity of the winding head of an electric machine at the actual conditions and at ambient temperature.
During operation the temperature of the electric machine and in particular its winding heads 10 increases; since the structural stiffness decreases at this increased operational temperature, the natural frequency drop by $Df_{Thermal}$ (reference B). This indicates the operational receptivity of the winding head of an electric machine at the actual conditions and at operational temperature.

In addition the structural stiffness also decreases for ageing (reference C); also this causes a natural frequency drop by $Df_{ageing}$. This indicates the operational receptivity of the winding head of an electric machine for the future.

To be noted that DfThermal and Dfageing can be estimated on the basis of available data from existing generators, for example they are comprised in the range of some 2-20Hz.

Thus in order to consider the influence of the operational temperature and ageing, the level of operational receptivity must be evaluated from $f_0$ to $f_0 + Df_{Thermal} + Df_{ageing}$.

In order to assess whether future operation is reliable or not, a design limit for the operational receptivity must be established.

These cases are possible:

1) the operational receptivity evaluated $f_0$ (reference A) is below the design limit, but the operational receptivity calculated from $f_0 + Df_{Thermal}$ is above the design limit; in this case unacceptable vibrations can be expected for the winding head when the electric machine works at the operating temperature.

2) the operational receptivity evaluated $f_0 + Df_{Thermal}$ (reference B) is below the design limit, but the operational receptivity calculated from $f_0 + Df_{Thermal} + Df_{ageing}$ is above the design limit; in this case an acceptable vibration level can be expected for the winding head in the actual conditions, but unacceptable vibrations can be expected for the future.

3) the operational receptivity evaluated $f_0 + Df_{Thermal} + Df_{ageing}$ (reference C) is below the design limit; in this case an acceptable vibration level can be expected for the winding head in the actual conditions and also for the (at least) near future.

Naturally the features described may be independently provided from one another.

In practice the materials used and the dimensions can be chosen at will according to requirements and to the state of the art.

REFERENCE NUMBERS

**[0138]**

1 electric machine
2 stator
3 rotor
4 stator core
5 slot
6 stator winding
7 slot
8 rotor winding
9 straight part of 6
10 winding heads
11 winding head circumference M1, M2, M3 measurement plane IPOS1, IPOS2 impact position MP1-MP5 measuring position
R, C rotation direction of forces and receptivity POS angular coordinate
D direct axis
Q quadrature axis

**Claims**

1. Method for assessment of the winding head vibration of an electric machine, the electric machine comprising:

- a stator (2),
- a rotor (3),
- the stator (2) having slots (5) housing stator windings (6), the stator windings (6) having winding heads (10) protruding outside of the slots (5), the winding heads (10) being distributed over a stator circumference (11), and/or
- the rotor (3) having slots (7) housing rotor windings (8), the rotor windings (8) having winding heads protruding outside of the slots (7), the winding heads being distributed over a rotor circumference,

- the method comprising the steps of: carrying out a first impact test at a first impact position (IPOS1),
- measuring values indicative of the winding head deformations caused by the first impact test at a plurality of measuring positions (MP1-MP5) distributed over the stator circumference (11) and/or rotor circumference,
- calculating a Fourier analysis of the values indicative of the winding head deformations caused by the first impact test and calculating two counter rotating waves (RWR1, RWC1) indicative of the deformations of the winding heads caused by the first impact test for each Fourier order,
- calculating values (RH1(POS, ORDER)) indicative of the winding head deformations caused by the first impact test at a given position caused by each one of the counter rotating waves,
- calculating the angular coordinate (DPOS1) with maximum values indicative of the winding head deformations caused by the first impact test,
- calculating at least a corrective factor (CORRD1, CORRQ1, TRUSTD1, TRUSTQ1, MC1, GOE1, CORRPOF1) for the counter rotating waves (RWR1, RWC1) caused by the first impact test, to take into account the actual test conditions with respect to the operating conditions,
- carrying out at least a second impact test at a second impact position (IPOS2),
- measuring values indicative of the winding head deformations caused by the second impact test at a plurality of measuring positions (MP1-MP5) distributed over the stator circumference (11) and/or rotor circumference,
- calculating a Fourier analysis of the values indicative of the winding head deformations caused by the second impact test and calculating two counter rotating waves (RWR2 , RWC2) indicative of the deformations of the winding heads caused by the second impact test for each Fourier order,
- calculating values (RH2(POS, ORDER)) indicative of the winding head deformations caused by the second impact test at a given position caused by each one of the counter rotating waves,
- calculating the angular coordinate (DPOS2) with maximum values indicative of the winding head deformations caused by the second impact test,
- calculating at least a corrective factor (CORRD2, CORRQ2, TRUSTD2, TRUSTQ2, MC2, GOE2, CORRPOF2) for the counter rotating waves (RWR2 , RWC2) caused by the second impact test, to take into account the actual test conditions with respect to the operating conditions,
- calculating two reliable counter rotating waves (RWRD, RWCD) indicative of the maximum deformations on the basis of:

  o the counter rotating waves (RWR1, RWC1, RWR2, RWC2) indicative of the deformations of the winding heads caused by the first and second impact tests for each order, and
  ∘ the at least a corrective coefficient (CORRD1, CORRQ1, TRUSTD1, TRUSTQ1, MC1, GOE1, CORRPOF1, CORRD2, CORRQ2, TRUSTD2, TRUSTQ2, MC2, GOE2, CORRPOF2),

- calculating a reliable angular coordinate (DPOSR) with maximum values indicative of the winding head deformations on the basis of two reliable counter rotating waves (RWRD, RWCD) indicative of the maximum deformations,
- calculating reliable maximum values (RD) indicative of the winding head deformations along an axis with maximum deformation,
- calculating two counter rotating waves (ORDFR, ORDFC) indicative of the deformations in the axis with maximum deformations caused by counter rotating force waves.

2. Method according to claim 1, **characterised by**:

  - calculating two reliable counter rotating waves (RWRQ, RWCQ) indicative of the minimum deformations on the basis of:

    ∘ the counter rotating waves (RWR1, RWC1, RWR2, RWC2) indicative of the deformations of the winding heads caused by the first and second impact tests for each order, and
    ∘ the at least a corrective coefficient (CORRD1, CORRQ1, TRUSTD1, TRUSTQ1, MC1, GOE1, CORRPOF1, CORRD2, CORRQ2, TRUSTD2, TRUSTQ2, MC2, GOE2, CORRPOF2),

  - calculating a reliable angular coordinate (QPOSR) with minimum values indicative of the winding head deformations on the basis of two reliable counter rotating waves (RWRQ, RWCQ) indicative of the minimum deformations,
  - calculating reliable minimal values (RQ) indicative of the winding head deformations along an axis electrically perpendicular to the axis wherein minimum deformation occur,
  - calculating two counter rotating waves (ORQFR, ORQFC) indicative of the deformations in the axis of minimum deformations electrically perpendicular to the axis of maximum deformations caused by counter rotating force waves.

3. Method according to claim 1, **characterised in that** the first impact position and the second impact position are angularly shifted by 45 degree.

4. Method according to claim 1, **characterised in that** the measuring positions (MP1-MP5) are uniformly distributed over the stator winding head circumference (11) and/or rotor winding head circumference.

5. Method according to claim 1, **characterised in that** the measured values are measured in the radial direction with respect to the longitudinal axis of the electric machine.

6. Method according to claim 1, **characterised in that** during the first and the second impact test the plane containing the measuring positions (MP1-MP5) is the same.

7. Method according to claim 6, **characterised in that** the measuring positions (MP1-MP5) during the first impact test and the second impact test are the same.

**Patentansprüche**

1. Verfahren zur Beurteilung der Wickelkopfschwingung einer elektrischen Maschine, wobei die elektrische Maschine aufweist:

   - einen Stator (2),
   - einen Rotor (3),
   - wobei der Stator (2) Nuten (5) aufweist, in denen Statorwicklungen (6) angeordnet sind, wobei die Statorwicklungen (6) Wickelköpfe (10) aufweisen, die aus den Nuten (5) herausragen, wobei die Wickelköpfe (10) über einen Statorumfang (11) verteilt sind, und/oder
   - wobei der Rotor (3) Nuten (7) aufweist, in denen Rotorwicklungen (8) angeordnet sind, wobei die Rotorwicklungen (8) Wickelköpfe aufweisen, die aus den Nuten (7) herausragen, wobei die Wickelköpfe über einen Rotorumfang verteilt sind,
   - wobei das Verfahren die folgenden Schritte aufweist: Durchführen eines ersten Aufpralltests an einer ersten Aufprallposition (IPOS1),
   - Messen von Werten, die hinsichtlich der durch den ersten Aufpralltest verursachten Wickelkopfverformungen indikativ sind, an mehreren Messpositionen (MP1-MP5), die über den Statorumfang (11) und/oder Rotorumfang verteilt sind,
   - Berechnen einer Fourieranalyse der Werte, die hinsichtlich der durch den ersten Aufpralltest verursachten Wickelkopfverformungen indikativ sind, und Berechnen von zwei gegensinnig rotierenden Wellen (RWR1, RWC1), die hinsichtlich der durch den ersten Aufpralltest verursachten Verformungen der Wickelköpfe indikativ sind, für jede Fourier-Ordnung,
   - Berechnen von Werten (RH1(POS, ORDER)), die hinsichtlich der durch den ersten Aufpralltest verursachten Wickelkopfverformungen an einer gegebenen Position indikativ sind, die durch jede der gegensinnig rotierenden Wellen verursacht werden,
   - Berechnen der Winkelkoordinate (DPOS1) mit maximalen Werten, die hinsichtlich der durch den ersten Aufpralltest verursachten Wickelkopfverformungen indikativ sind,
   - Berechnen wenigstens eines Korrekturfaktors (CORRD1, CORRQ1, TRUSTD1, TRUSTQ1, MC1, GOE1, CORRPOF1) für die gegensinnig rotierenden Wellen (RWR1, RWC1), die durch den ersten Aufpralltest verursacht werden, um die tatsächlichen Testbedingungen in Bezug auf die Betriebsbedingungen zu berücksichtigen,
   - Durchführen wenigstens eines zweiten Aufpralltests an einer zweiten Aufprallposition (IPOS2),
   - Messen von Werten, die hinsichtlich der durch den zweiten Aufpralltest verursachten Wickelkopfverformungen indikativ sind, an mehreren Messpositionen (MP1-MP5), die über den Statorumfang (11) und/oder Rotorumfang verteilt sind,
   - Berechnen einer Fourieranalyse der Werte, die hinsichtlich der durch den zweiten Aufpralltest verursachten Wickelkopfverformungen indikativ sind, und Berechnen von zwei gegensinnig rotierenden Wellen (RWR2, RWC2), die hinsichtlich der durch den zweiten Aufpralltest verursachten Verformungen der Wickelköpfe indikativ sind, für jede Fourier-Ordnung,
   - Berechnen von Werten (RH2(POS, ORDER)), die hinsichtlich der durch den zweiten Aufpralltest verursachten Wickelkopfverformungen an einer gegebenen Position indikativ sind, die durch jede der gegensinnig rotierenden Wellen verursacht werden,

- Berechnen der Winkelkoordinate (DPOS2) mit maximalen Werten, die hinsichtlich der durch den zweiten Aufpralltest verursachten Wickelkopfverformungen indikativ sind,
- Berechnen wenigstens eines Korrekturfaktors (CORRD2, CORRQ2, TRUSTD2, TRUSTQ2, MC2, GOE2, CORRPOF2) für die gegensinnig rotierenden Wellen (RWR2, RWC2), die durch den zweiten Aufpralltest verursacht werden, um die tatsächlichen Testbedingungen in Bezug auf die Betriebsbedingungen zu berücksichtigen,
- Berechnen von zwei zuverlässigen gegensinnig rotierenden Wellen (RWRD, RWCD), die hinsichtlich der maximalen Verformungen indikativ sind, auf der Basis:

  ∘ der gegensinnig rotierenden Wellen (RWR1, RWC1, RWR2, RWC2), die hinsichtlich der durch den ersten und zweiten Aufpralltest verursachten Verformungen der Wickelköpfe indikativ sind, für jede Ordnung, und
  ∘ des wenigstens einen Korrekturkoeffizienten (CORRD1, CORRQ1, TRUSTD1, TRUSTQ1, MC1, GOE1, CORRPOF1, CORRD2, CORRQ2, TRUSTD2, TRUSTQ2, MC2, GOE2, CORRPOF2),

- Berechnen einer zuverlässigen Winkelkoordinate (DPOSR) mit maximalen Werten, die hinsichtlich der Wickelkopfverformungen indikativ sind, auf der Basis von zwei zuverlässigen gegensinnig rotierenden Wellen (RWRD, RWCD), die hinsichtlich der maximalen Verformungen indikativ sind,
- Berechnen zuverlässiger maximaler Werte (RD), die hinsichtlich der Wickelkopfverformungen entlang einer Achse mit maximaler Verformung indikativ sind,
- Berechnen von zwei gegensinnig rotierenden Wellen (ORDFR, ORDFC), die hinsichtlich der Verformungen in der Achse mit maximalen Verformungen indikativ sind, die durch gegensinnig rotierende Kraftwellen verursacht werden.

2. Verfahren nach Anspruch 1, **gekennzeichnet durch**:

   - Berechnen von zwei zuverlässigen gegensinnig rotierenden Wellen (RWRQ, RWCQ), die hinsichtlich der minimalen Verformungen indikativ sind, auf der Basis:

     ∘ der gegensinnig rotierenden Wellen (RWR1, RWC1, RWR2, RWC2), die hinsichtlich der **durch** den ersten und zweiten Aufpralltest verursachten Verformungen der Wickelköpfe indikativ sind, für jede Fourier-Ordnung, und
     ∘ des wenigstens einen Korrekturkoeffizienten (CORRD1, CORRQ1, TRUSTD1, TRUSTQ1, MC1, GOE1, CORRPOF1, CORRD2, CORRQ2, TRUSTD2, TRUSTQ2, MC2, GOE2, CORRPOF2),

   - Berechnen einer zuverlässigen Winkelkoordinate (QPOSR) mit minimalen Werten, die hinsichtlich der Wickelkopfverformungen indikativ sind, auf der Basis von zwei zuverlässigen gegensinnig rotierenden Wellen (RWRQ, RWCQ), die hinsichtlich der minimalen Verformungen indikativ sind,
   - Berechnen zuverlässiger minimaler Werte (RQ), die hinsichtlich der Wickelkopfverformungen entlang einer Achse indikativ sind, die elektrisch orthogonal zu der Achse ist, in der minimale Verformungen auftreten,
   - Berechnen von zwei gegensinnig rotierenden Wellen (ORQFR, ORQFC), die hinsichtlich der Verformungen in der Achse minimaler Verformungen indikativ sind, die elektrisch orthogonal zu der Achse maximaler Verformungen ist, die **durch** gegensinnig rotierende Kraftwellen verursacht werden.

3. Verfahren nach Anspruch 1, **dadurch gekennzeichnet, dass** die erste Aufprallposition und die zweite Aufprallposition winkelmäßig um 45 Grad zueinander versetzt sind.

4. Verfahren nach Anspruch 1, **dadurch gekennzeichnet, dass** die Messpositionen (MP1-MP5) gleichmäßig über den Statorwickelkopfumfang (11) und/oder Rotorwickelkopfumfang verteilt sind.

5. Verfahren nach Anspruch 1, **dadurch gekennzeichnet, dass** die gemessenen Werte in der radialen Richtung bezüglich der Längsachse der elektrischen Maschine gemessen werden.

6. Verfahren nach Anspruch 1, **dadurch gekennzeichnet, dass** während des ersten und des zweiten Aufpralltests die Ebene, welche die Messpositionen (MP1-MP5) enthält, dieselbe ist.

7. Verfahren nach Anspruch 6, **dadurch gekennzeichnet, dass** die Messpositionen (MP1-MP5) während des ersten Aufpralltests und des zweiten Aufpralltests dieselben sind.

**Revendications**

1. Procédé d'évaluation de la vibration de tête d'enroulement d'une machine électrique, la machine électrique comportant :

   - un stator (2),
   - un rotor (3),
   - le stator (2) étant doté d'encoches (5) accueillant des enroulements (6) de stator, les enroulements (6) de stator étant dotés de têtes (10) d'enroulements dépassant à l'extérieur des encoches (5), les têtes (10) d'enroulements étant réparties sur une circonférence (11) de stator, et/ou
   - le rotor (3) étant doté d'encoches (7) accueillant des enroulements (8) de rotor, les enroulements (8) de rotor étant dotés de têtes d'enroulements dépassant à l'extérieur des encoches (7), les têtes d'enroulements étant réparties sur une circonférence de rotor,
   - le procédé comportant les étapes consistant à : réaliser un premier essai d'impact à une première position d'impact (IPOS1),
   - mesurer des valeurs indicatives des déformations des têtes d'enroulements provoquées par le premier essai d'impact à une pluralité de positions de mesure (MP1-MP5) réparties sur la circonférence (11) du stator et/ou la circonférence du rotor,
   - calculer une analyse de Fourier des valeurs indicatives des déformations des têtes d'enroulements provoquées par le premier essai d'impact et calculer deux ondes contrarotatives (RWR1, RWC1) indicatives des déformations des têtes d'enroulements provoquées par le premier essai d'impact pour chaque ordre de Fourier,
   - calculer des valeurs (RH1(POS, ORDER)) indicatives des déformations des têtes d'enroulements provoquées par le premier essai d'impact à une position donnée provoquées par chacune des ondes contrarotatives,
   - calculer la coordonnée angulaire (DPOS1) présentant les valeurs maximales indicatives des déformations des têtes d'enroulements provoquées par le premier essai d'impact,
   - calculer au moins un facteur correcteur (CORRD1, CORRQ1, TRUSTD1, TRUSTQ1, MC1, GOE1, CORRPOF1) pour les ondes contrarotatives (RWR1, RWC1) provoquées par le premier essai d'impact, afin de prendre en compte les conditions réelles d'essai par rapport aux conditions de fonctionnement,
   - réaliser au moins un deuxième essai d'impact à une deuxième position d'impact (IPOS2),
   - mesurer des valeurs indicatives des déformations des têtes d'enroulements provoquées par le deuxième essai d'impact à une pluralité de positions de mesure (MP1-MP5) réparties sur la circonférence (11) du stator et/ou la circonférence du rotor,
   - calculer une analyse de Fourier des valeurs indicatives des déformations des têtes d'enroulements provoquées par le deuxième essai d'impact et calculer deux ondes contrarotatives (RWR2, RWC2) indicatives des déformations des têtes d'enroulements provoquées par le deuxième essai d'impact pour chaque ordre de Fourier,
   - calculer des valeurs (RH2(POS, ORDER)) indicatives des déformations des têtes d'enroulements provoquées par le deuxième essai d'impact à une position donnée provoquées par chacune des ondes contrarotatives,
   - calculer la coordonnée angulaire (DPOS2) présentant les valeurs maximales indicatives des déformations des têtes d'enroulements provoquées par le deuxième essai d'impact,
   - calculer au moins un facteur correcteur (CORRD2, CORRQ2, TRUSTD2, TRUSTQ2, MC2, GOE2, CORRPOF2) pour les ondes contrarotatives (RWR2, RWC2) provoquées par le deuxième essai d'impact, afin de prendre en compte les conditions réelles d'essai par rapport aux conditions de fonctionnement,
   - calculer deux ondes contrarotatives fiables (RWRD, RWCD) indicatives des déformations maximales d'après :

      les ondes contrarotatives (RWR1, RWC1, RWR2, RWC2) indicatives des déformations des têtes d'enroulements provoquées par les premier et deuxième essais d'impact pour chaque ordre, et
      le ou les coefficients correcteurs (CORRD1, CORRQ1, TRUSTD1, TRUSTQ1, MC1, GOE1, CORRPOF1, CORRD2, CORRQ2, TRUSTD2, TRUSTQ2, MC2, GOE2, CORRPOF2),

   - calculer une coordonnée angulaire fiable (DPOSR) présentant les valeurs maximales indicatives des déformations de têtes d'enroulements d'après deux ondes contrarotatives fiables (RWRD, RWCD) indicatives des déformations maximales,
   - calculer des valeurs maximales fiables (RD) indicatives des déformations de têtes d'enroulements suivant un axe à déformation maximale,
   - calculer deux ondes contrarotatives (ORDFR, ORDFC) indicatives des déformations suivant l'axe à déformation maximales provoquées par des ondes contrarotatives de force.

2. Procédé selon la revendication 1, **caractérisé par** les étapes consistant à :

 - calculer deux ondes contrarotatives fiables (RWRQ, RWCQ) indicatives des déformations minimales d'après :

 les ondes contrarotatives (RWR1, RWC1, RWR2, RWC2) indicatives des déformations des têtes d'enroulements provoquées par les premier et deuxième essais d'impact pour chaque ordre, et
 le ou les coefficients correcteurs (CORRD1, CORRQ1, TRUSTD1, TRUSTQ1, MC1, GOE1, CORRPOF1, CORRD2, CORRQ2, TRUSTD2, TRUSTQ2, MC2, GOE2, CORRPOF2),

 - calculer une coordonnée angulaire fiable (QPOSR) présentant des valeurs minimales indicative des déformations de têtes d'enroulements d'après deux ondes contrarotatives fiables (RWRQ, RWCQ) indicatives des déformations minimales,
 - calculer des valeurs minimales fiables (RQ) indicatives des déformations de têtes d'enroulements suivant un axe électriquement perpendiculaire à l'axe où se produit la déformation minimale,
 - calculer deux ondes contrarotatives (ORQFR, ORQFC) indicatives des déformations suivant l'axe de déformations minimales électriquement perpendiculaire à l'axe de déformations maximales provoquées par des ondes contrarotatives de force.

3. Procédé selon la revendication 1, **caractérisé en ce que** la première position d'impact et la deuxième position d'impact sont décalées angulairement de 45 degrés.

4. Procédé selon la revendication 1, **caractérisé en ce que** les positions de mesure (MP1-MP5) sont réparties uniformément sur la circonférence (11) de tête d'enroulement du stator et/ou la circonférence de tête d'enroulement du rotor.

5. Procédé selon la revendication 1, **caractérisé en ce que** les valeurs mesurées sont mesurées dans la direction radiale par rapport à l'axe longitudinal de la machine électrique.

6. Procédé selon la revendication 1, **caractérisé en ce que**, pendant le premier et le deuxième essai d'impact, le plan contenant les positions de mesure (MP1-MP5) est le même.

7. Procédé selon la revendication 6, **caractérisé en ce que** les positions de mesure (MP1-MP5) pendant le premier essai d'impact et le deuxième essai d'impact sont les mêmes.

Fig. 1

Fig. 2

Fig. 3

Fig. 4

No risk for excessive vibration levels:

Fig. 5

Significant risk for excessive vibration levels:

Fig. 6

Fig. 7